# EUROPÄISCHE PATENTANMELDUNG

(11) **EP 2 565 476 A1**
(43) Veröffentlichungstag der Anmeldung: **06.03.2013**
(21) Anmeldenummer: 11179524.1
(22) Anmeldetag: 31.08.2011
(51) Int. Cl.: F16C 33/10

(54) **Interne Ölversorgung für ein Lager**

(71) Anmelder: SIEMENS AKTIENGESELLSCHAFT, 80333 München (DE)
(72) Erfinder: Böckel, Frank, 53773 Hennef (DE); Zimmermann, Adam, 45476 Mülheim a.d. Ruhr (DE)

(57) **Zusammenfassung**

Die Erfindung betrifft eine Blende (2) mit einer Blendenöffnung (3) für die Ölzufuhr für ein Radialkippsegmentlager, wobei die Blendenöffnung (3) durch einen Piezo-Effekt verstellbar ist.

## Beschreibung

Die Erfindung betrifft eine Druckmediumszufuhr für ein Lager, umfassend eine Blende mit zumindest einer Blendenöffnung.

Des Weiteren betrifft die Erfindung ein Verfahren zur Regelung der Druckmediumszufuhr für ein Lager, wobei das Lager mit Druckmedium versorgt wird.

Im Kraftwerksbau wird insbesondere bei den Strömungsmaschinen bzw. elektrischen Generatoren Lager verwendet, die mit Öl versorgt werden. Solche Lager sind beispielsweise Radialkippsegmentlager, die dadurch charakterisiert sind, dass in einem Ringraum ein Drucköl ausgebildet ist, das zu einer guten Lagereigenschaft von vergleichsweise schweren rotationssymmetrischen Bauteilen führt. Dabei wird in heutigen Ausführungsformen die interne Ölversorgung der Radialkippsegmentlager über Direkteinspritzung über feststehende Düsen oder Direktversorgung über Ölräume innerhalb des Segments realisiert. Die tribologischen Eigenschaften des Systems und der Durchfluss werden durch entsprechende Blenden innerhalb des Lagers bestimmt. Der Druck und das Ölvolumen für die Ölversorgung der einzelnen Segmente werden gemäß dem Stand der Technik nur bei Stillstand der entsprechenden Strömungsmaschinen bzw. Generatoren modifiziert. Nachteilig ist dies dadurch, dass das gesamte Kraftwerk vom Netz gehen muss und abgeschaltet wird. Insbesondere bei Kernkraftwerken ist dies eine negative Bedingung, die es gilt möglichst zu beseitigen, damit die Stillstandszeiten von Kernkraftwerken möglichst gering ausfallen.

Die Erfindung hat es sich zur Aufgabe gemacht, die Zuführung von Öl für ein Lager derart zu verbessern, dass Stillstandszeiten wesentlich verkürzt werden.

Gelöst wird diese Aufgabe durch eine Druckmediumszufuhr für ein Lager, umfassend eine Blende mit zumindest einer Blendenöffnung, wobei die Blende derart ausgebildet ist, dass die Blendenöffnung mittels eines Piezo-Effektes veränderbar ist.

Der Piezo-Effekt ist (kurz dargestellt) ein physikalischer Effekt, bei dem die Geometrie eines Festkörpers bei Anlegen einer elektrischen Spannung veränderbar ist. Erfindungsgemäß wird dieser Piezo-Effekt ausgenutzt, indem eine Blende mit einer Blendenöffnung aus einem Material hergestellt wird, das einen Piezo-Effekt zeigt. Die Blende wird hierbei derart ausgebildet, dass die Blendenöffnung, durch die das Druckmedium geführt wird, veränderbar ist. Dadurch kann durch eine vergleichsweise einfache Verfahrenshandlung, wie das Anlegen einer elektrischen Spannung, der Zufluss und der Druck des Druckmediums zum Lager verändern. Ein Ausbauen des Lagers um die statisch gefertigten Blenden durch andere Blendenöffnungen zu ersetzen, entfällt gänzlich. Somit muss ein Kraftwerk nicht vom Netz genommen werden, falls die Druckmediumszufuhr verändert werden soll.

In den Unteransprüchen sind vorteilhafte Weiterbildungen angegeben.

So wird in einer ersten vorteilhaften Weiterbildung die Druckmediumszufuhr derart weitergebildet, dass die Blende Öl als Druckmedium durchlässt. Es sind Piezo-Keramiken bekannt, die geeignet sind, Öl als Druckmediums-Zufuhr einzusetzen.

In einer weiteren vorteilhaften Weiterbildung wird das Lager als Radialkippsegmentlager ausgebildet. Radialkippsegmentlager sind die gängigsten Lagertypen, die im Kraftwerksbau eingesetzt werden.

Die auf das Verfahren gerichtete Aufgabe wird gelöst durch ein Verfahren zur Regelung der Druckmediumszufuhr für ein Lager, wobei das Lager mit Druckmedium versorgt wird und das Druckmedium durch eine Blende strömt, wobei die Zufuhr-Menge durch die Blende durch über den Piezo-Effekt verstellbaren Blendenöffnungen regelbar ist.

Die Vorteile die sich beim Verfahren gegenüber den Verfahren gemäß dem Stand der Technik ergeben, entsprechen den Vorteilen, welche bei der Druckmediumszufuhr genannt sind.

In einer ersten vorteilhaften Weiterbildung des Verfahrens wird hierbei Öl als Druckmedium verwendet.

Des Weiteren wird das Lager als Radialkippsegmentlager verwendet.

Ein Ausführungsbeispiel der Erfindung wird anhand der schematischen Zeichnungen näher erläutert.

Es zeigen:
- FIG 1: eine Blende bei maximalem Durchfluss;
- FIG 2: die Blende mit verstellter Blendenöffnung.

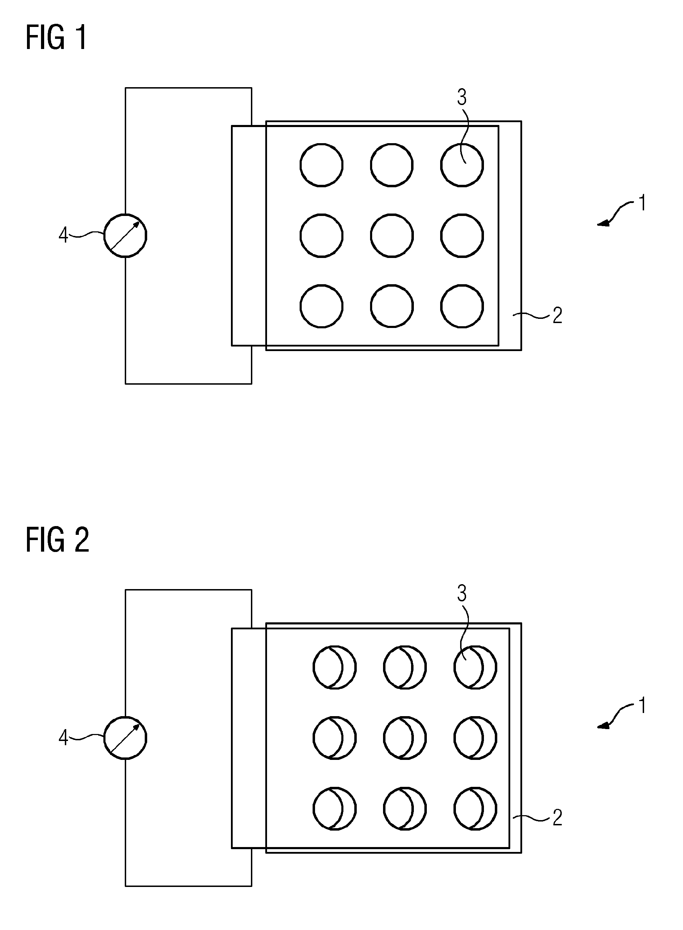

Die FIG 1 zeigt eine Druckmediumszufuhr 1 für ein nicht näher dargestelltes Lager. Dieses Lager kann ein Radialkippsegmentlager sein, das im Kraftwerksbau, insbesondere bei Dampfturbinen eingesetzt wird. Die Druckmediumszufuhr 1 weist eine Blende 2 auf, mit Blendenöffnungen 3 (wobei nur eine Blendenöffnung mit dem Bezugszeichen 3 versehen ist). Durch die Blendenöffnung 3 strömt ein Druckmedium, was bevorzugt Öl ist. Die Blende 2 ist aus einem Material ausgebildet, das den Piezo-Effekt zeigt.

Die Blende 2 ist an eine Spannungsversorgung 4 elektrisch angeschlossen, so dass die Blende 2 ein Potenzialunterschied erfährt. In der in FIG 1 gezeigten Darstellung ist die Spannungsversorgung derart eingestellt, dass der maximale Durchfluss durch die Blendenöffnung 3 erfolgt. Das bedeutet, dass keine Spannung und somit kein Potenzialunterschied an der Blende 2 anliegt.

Die FIG 2 zeigt die Blende 2 von FIG 1, wobei eine elektrische Spannung an der Blende 2 nunmehr anliegt. Da die Blende 2 aus einem Material hergestellt ist, das den Piezo-Effekt zeigt, ändert sich die Blendenöffnung 3 derart, dass der Querschnitt verringert wird. Durch diese Querschnittsverringerung ändert sich auch die Durchflussmenge, die durch die Blendenöffnung 3 strömt. Die elektrische Spannung an der Spannungsversorgung ist derart veränderbar, dass die Druckmediumszufuhr 1 durch die Blendenöffnung 3 nahezu beliebig einstellbar ist.

Dies wird ausgenutzt bei einem Verfahren zur Regelung der Druckmediumszufuhr für ein Lager. Das Lager wird hierbei, wie weiter oben beschrieben, mit Öl versorgt, wobei das Druckmedium durch die Blendenöffnung 3 strömt. Während des Betriebs der Dampfturbine kann die Zufuhrmenge durch die Blendenöffnung 3 über die elektrische Spannung an der Blende 2 verändert werden. Somit ist eine während des Betriebs veränderte Durchflussmenge einstellbar.

## Patentansprüche

1. Druckmediumszufuhr (1) für ein Lager,
umfassend eine Blende (2) mit zumindest einer Blendenöffnung (3),
**dadurch gekennzeichnet, dass**
die Blende (2) derart ausgebildet ist, dass die Blendenöffnung (3) mittels eines Piezo-Effektes veränderbar ist.

2. Druckmediumszufuhr (1) nach Anspruch 1,
derart ausgebildet, dass die Blende (2) Öl als Druckmedium durchlässt.

3. Druckmediumszufuhr (1) nach Anspruch 1 oder 2,
wobei das Lager als Radialkippsegmentlager ausgebildet ist.

4. Verfahren zur Regelung der Druckmediumszufuhr (1) für ein Lager,
wobei das Lager mit Druckmedium versorgt wird und das Druckmedium durch eine Blende (2) strömt,
wobei die Zuführmenge durch die Blende (2) durch die über den Piezo-Effekt verstellbare Blendenöffnung (3) regelbar ist.

5. Verfahren nach Anspruch 4,
wobei Öl als Druckmedium verwendet wird.

6. Verfahren nach Anspruch 5,
wobei als Lager ein Radialkippsegmentlager verwendet wird.
